(19) Europäisches Patentamt
European Patent Office
Office européen des brevets

(11) EP 4 737 990 A1

(12) EUROPEAN PATENT APPLICATION

(43) Date of publication:
06.05.2026 Bulletin 2026/19

(51) International Patent Classification (IPC):
G02F 1/01 (2006.01)    G06N 10/00 (2022.01)

(21) Application number: 24210323.2

(22) Date of filing: 31.10.2024

(52) Cooperative Patent Classification (CPC):
G02F 1/01; G06N 10/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicants:
• Deutsche Telekom AG
53113 Bonn (DE)
• Technische Universität München
80333 München (DE)

(72) Inventors:
• LITVIN, Ihar
80337 München (DE)
• NÖTZEL, Janis
81829 München (DE)
• GEITZ, Marc
58089 Hagen (DE)

(74) Representative: 2SPL Patentanwälte PartG mbB
Landaubogen 3
81373 München (DE)

(54) **METHOD, APPARATUS AND COMPUTER PROGRAM FOR PHASE ADJUSTMENT OF SIGNALS OF A PHOTONIC PROCESSOR**

(57) Provided is a method for phase adjustment. The method includes receiving data indicating a characteristic of photonic output signals of a photonic processor. The method further includes generating a control signal for controlling adjustment of a phase of at least one photonic processing signal based on the characteristic according to a predetermined logic.

Receiving data indicating a characteristic of photonic output signals of a photonic processor — 110

Generating a control signal for controlling adjustment of a phase of at least one photonic processing signal based on the characteristic — 120

100

Fig. 1

**Description**

**Field**

The present disclosure relates to photonic processing and in particular to a method for phase adjustment, an apparatus for phase adjustment, and a computer program.

**Background**

Photonic processing may relate to a type of computing in which, instead of electric signals, light signals (i.e., photons) may be used. A photonic processor may relate to a type of computing device that uses light instead of electrons to perform data processing. By leveraging the speed and bandwidth of light, photonic processors may be able to process information faster than traditional electronic processors, potentially enabling more efficient and faster computations. Photonic processors may use optical components such as lasers, waveguides, photodetectors, interferometers, beam splitters, and the like, to manipulate and transmit data. Photonic processors may especially be suitable for tasks requiring massive data transmission, like in telecommunications and high-performance computing. Also, it may be possible to reduce energy consumption compared to electronic processors, making them an attractive solution for future computing technologies.

There may be a demand for improved stabilization of photonic processors.

**Summary**

This demand may be satisfied by the subject-matter of the independent claims. Further embodiments or examples are given by the dependent claims, the drawings, and the following description.

According to a first aspect, the disclosure provides a method for phase adjustment. The method comprises receiving data indicating a characteristic of photonic output signals of a photonic processor. The method further comprises generating a control signal for controlling adjustment of a phase of at least one photonic processing signal based on the characteristic according to a predetermined logic.

Thereby, phase stabilization for a photonic processor may be provided and computing of the photonic processor may be improved. Thereby, significant boost in performance for integrated optical devices used in quantum computing, quantum communication, quantum detection, and specialized classical operations may be achieved. However, without proper stabilization, these devices would potentially fail to function effectively.

In some examples, the characteristic of the photonic output signals comprises output powers of the photonic output signals. The predetermined logic comprises comparing the output powers. The control signal is generated based on the comparison of the output powers.

Thereby, a dependency of the output power and the phase may be utilized.

In some examples, the predetermined logic comprises determining, based on the comparison of the output powers, a direction for the adjustment of the phase by a predetermined phase increment. The control signal is generated to control adjustment of the phase by the predetermined phase increment in the determined direction.

Thereby, a feedback loop may be provided to adjust the phase.

In some examples, the predetermined logic comprises determining, based on the comparison of the output powers, a phase shift for the adjustment of the phase. The control signal is generated to control adjustment of the phase by the determined phase shift.

Thereby, the phase-shift may be (directly) calculated and adjusted accordingly.

In some examples, the at least one photonic processing signal carries data to be processed by the photonic processor.

Thereby, improved processing may be achieved.

In some examples, the photonic output signals and the at least one photonic processing signal have a same photonic characteristic. The at least one photonic processing signal is a photonic input signal for the photonic processor or a photonic signal processed in the photonic processor.

Thereby, the photonic output signals may be generated based on the at least one photonic processing signal and no additional photonic signals may be needed.

In some examples, the photonic output signals are based on at least one auxiliary photonic processing signal processed along the same photonic signal path of the photonic processor as the at least one photonic processing signal. The at least one photonic processing signal has a first photonic characteristic. The photonic output signals and the at least one auxiliary photonic processing signal have a second photonic characteristic different from the first photonic characteristic.

Thereby, an auxiliary signal may be used for adjusting the photonic processing signal such that more processing outputs can be achieved. Otherwise, if the photonic output signals and the photonic processing signals have the same photonic characteristic(s), at least one photonic output signal may be needed for feedback control instead of processing.

In some examples, the control signal is configured to control a pairwise adjustment of the phase of at least two photonic processing signals based on which at least two photonic output signals are generated. The pairwise adjustment comprises applying an alternating phase-shift to the at least two photonic processing signals.

Thereby, the photonic processor may be further stabilized.

According to a second aspect, the disclosure provides an apparatus for phase adjustment, the apparatus comprising circuitry configured to carry out the method according to the first aspect or according to any example relating to the first aspect.

Similar effects as described with respect to the first aspect may be achieved.

In some examples, the apparatus further comprises measurement circuitry configured to measure the characteristic and generate the data indicating the characteristic.

Thereby, the data may be provided to the circuitry for adjusting the phase.

In some examples, the apparatus further comprises at least one phase-shifter for the at least one photonic processing signal. The circuitry is further configured to output the control signal to the at least one phase-shifter.

Thereby, the phase adjustment may be carried out.

In some examples, the at least one phase-shifter is external to the photonic processor and configured to adjust the phase of the at least one photonic processing signal before being input into the photonic processor.

Thereby, faster phase adjustment may be achieved.

In some examples, the apparatus further comprises the photonic processor.

Thereby, similar effects as above may be achieved.

In some examples, the apparatus further comprises a plurality of photonic input fibers coupled to inputs of the photonic processor. The apparatus further comprises a plurality of photonic output fibers coupled to outputs of the photonic processor and configured to transmit the photonic output signals. The adjustment of the phase is for compensating a disturbance that is imparted to at least one of the plurality of photonic input fibers and the plurality of photonic output fibers.

Thereby, sensitivity of the input or output fibers may be compensated for.

In some examples, the at least one phase-shifter is internal to the photonic processor and configured to adjust the phase of the at least one photonic processing signal in the photonic processor.

Thereby, no external phase-shifter may be necessary and circuitry that is already present in the photonic processor may be utilized.

According to a third aspect, the disclosure provides a computer program comprising instructions which, when the program is executed by a computer, cause the computer to carry out the method according to the first aspect or according to any example relating to the first aspect.

Thereby, similar effects as described above may be achieved.

**Brief description of the Figures**

Some examples of apparatuses and/or methods will be described in the following by way of example only, and with reference to the accompanying figures, in which

Fig. 1 depicts a method for phase stabilization according to the present disclosure;

Fig. 2 depicts diagrams depicting phase instability before and after input into a photonic processor;

Fig. 3 depicts a relation between output power and unintended phase-shift of two signals;

Fig. 4 depicts an apparatus according to the present disclosure;

Fig. 5 depicts a chip of a photonic processor according to the present disclosure with two input signals;

Fig. 6 depicts the chip of Fig. 5 with three input signals;

Fig. 7 depicts the chip of Fig. 5 with an external phase-shifter;

Fig. 8 depicts a result of the present disclosure;

Fig. 9 depicts a photonic processor 900 in which auxiliary photonic processing signals are used for phase adjustment; and

Fig. 10 depicts a chip of a photonic processor for performing a Hadamard transformation.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

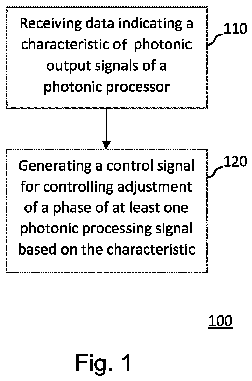

Fig. 1 depicts a flowchart of a method 100 for phase adjustment according to the present disclosure.

Phase adjustment may relate to a correction or a shifting of a phase of a photonic signal for or in a photonic processor. A photonic processor may use light (i.e., photons) instead of electrical signals (electrons) to process data. It may include optical components such as waveguides, lasers, photodetectors, interferometers (e.g., Mach-Zehnder interferometer), and the like, to manipulate input light (i.e., a photonic signal) for computing tasks. Data may be encoded in light waves, which may travel through a processing pipeline of the photonic processor with minimal energy loss. However, optical fibers may be connected to the photonic processing chip for inputting or outputting a photonic signal. Such optical fibers may be sensitive to small disturbances (e.g., vibrations) and may deteriorate a phase of the photonic signal, such that an erroneous computing/processing result (or no usable result at all) may be output by the photonic processor.

In general terms, a photonic processors (such as an optical photonic processor which may use optical light) may relate to an (integrated) optical device capable of performing quantum and classical operations. For example, quantum optical operations may include one or more of single-qubit gate operations at network nodes, superposition and interference of photons and weak laser beams, routing and switching of quantum optical states in fiber networks, specialized detection schemes utilizing the phase correlation of individual photons, or the like.

Classical operations may include one or more of routing and switching of optical transport channels, optical processing at the interface between the physical and IP layers (e.g., transponders for IP-optical line switching), physical layer security solutions that impose random phase shifts on optical signals based on external key material, or the like.

However, performance of photonic processors may depend on stability in phase, polarization, and timing to ensure precise operation and high performance. To achieve this, optical processors may rely on linear (quantum) optical operations, which may demand exceptional stability to enable photon interactions. Key to this stability may include polarization or phase coherence. Without such stability, quantum effects may not manifest, preventing the processor from functioning as intended.

In network provider environments, such as network operating centers, vibrations, constant airflow, and human interactions may result in an unstable photonic processor that may fail to function properly.

For example, apart from the optical input and output fibers, a photonic processor may include a chip that includes above-mentioned optical components and which may require some kind of cooling system, such as water cooling, air cooling, or the like. For adjusting phases of photonic processing signals, the chip may include a plurality of heaters whose refractive index may depend on their temperature. When light passes through a heater, a path difference may be generated (based on the refractive index) and thereby, the phase may be adjusted. To prevent overheating, it may be necessary to cool the chip to maintain a stable temperature. However, vibrations caused by the air-cooling fans (or by flowing water of a water cooler) may lead to unwanted shaking of the connecting optical fibers. This may result in phase instability, which may cause the interference of the output optical beams to become unstable. Consequently, this instability may make it impossible to achieve a stable and repeatable output from the processor when multiple input signals are used.

The chip may receive control signals of, for example, 100 mW per control line, resulting in a total power consumption of around 15 W for an 8-port processor. As the number of I/O ports increases, the number of control devices may scale quadratically, further increasing power consumption. One way to dissipate the heat generated by the control signals at room temperature may be based on an air-fan or water cooling, or the like. However, this may deteriorate the chip's performance, as vibrations and airflow from the cooling system may negatively affect the stability and precision of the optical components.

Therefore, the present disclosure proposes to adjust/correct the deteriorated phase(s) of photonic (processing) signals to achieve usable results in photonic processing.

Returning to Fig. 1, the method 100 includes receiving, 110, data indicating a characteristic of photonic output signals of a photonic processor. A photonic output signal may refer to a photonic signal after being processed by the photonic processor which may be measured at an output (fiber) of the photonic processor. According to the present disclosure, the characteristic of at least two photonic output signals may be determined/measured. These characteristics of the at least two photonic output signals may be compared in order to adjust the phase of at least one photonic processing signal (e.g., input signal or any signal within the photonic processor). For example, if (only) two photonic output signals are present, a phase of one photonic output signal relative to the other photonic output signal may be shifted/adjusted. Although both photonic output signals may be subject to unwanted phase-deterioration, it may be sufficient to only adjust one of the two and not shift the other one (although this still might be done in some examples).

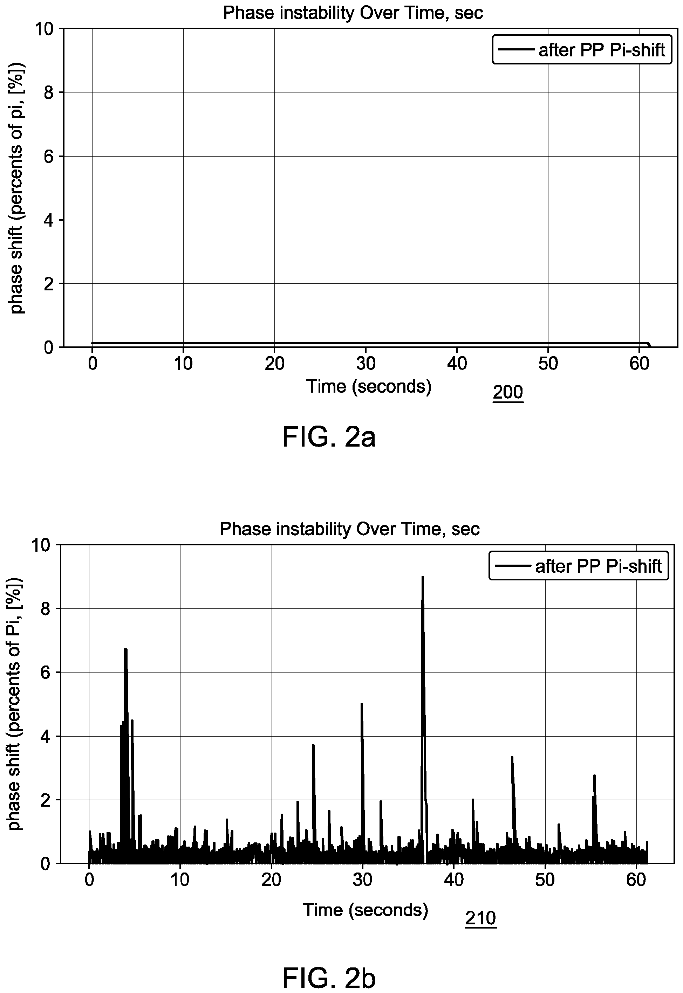

Fig. 2 depicts a diagram for explaining a phase instability of the signals processed by a photonic processor. Fig. 2a depicts an unwanted phase-shift (on a y-axis) between two photonic input signals (photonic signals before being processed/input) versus time. As can be taken from Fig. 2a, no or minimal unwanted phase-shift occurs at that stage.

However, as can be taken from Fig. 2b, unwanted phase-shift between the two signals may be present after processing by the photonic processor.

The following table shows a statistical analysis of the velocity of the phase-shifts (i.e., a differential of the data of Fig. 2):

| Parameters | Before processor | After processor |
|---|---|---|
| Mean velocity (%($\pi$)/sec): | 0.820 | 5.813 |
| Standard deviation of velocity (%($\pi$)/sec): | 0.900 | 14.467 |
| Max velocity (%($\pi$)/sec): | 7.231 | 422.786 |
| Median velocity (%($\pi$)/sec): | 0.400 | 1.370 |

A comparison of the above parameters shows that the photonic processor may add the unwanted phase-shift. phase-shift may change drastically.

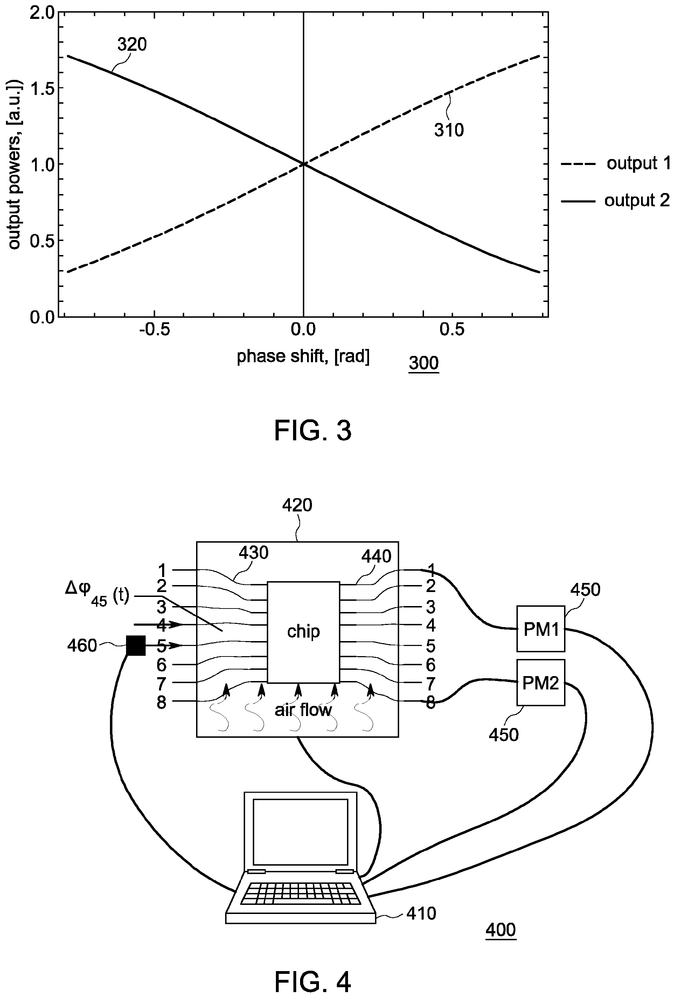

The characteristic may include a power of the of the photonic output signal. It has been recognized that unwanted phase-shifts may be associated with a deterioration of the signal power. This dependency is depicted in Fig. 3.

Fig. 3 depicts a diagram exemplarily representing how power distribution between two photonic output signals 310 and 320 varies as a function of phase-difference.

output powers of two photonic output signals 310 and 320 measured at two different outputs of a photonic processor. When the input powers of the corresponding signals are the same, at a negative phase-shift, the first photonic output signal 310 has a low output power and the second photonic output signal has a high output power. On the other hand, at a positive phase-shift, the first photonic output signal 310 has a high output power and the second photonic output signal has a low output power. At zero phase-shift, the output powers of the two photonic output signals 310 and 320 are the same.

Hence, it has been recognized that feedback control may be used to adjust the power differences (or intensity/amplitude differences) between the two outputs, thereby ensuring that the photonic processor can maintain (precise) phase alignment under varying operational conditions. However, the characteristic is not limited to the power. For example, an intensity or an amplitude may be used as the characteristic.

Returning to Fig. 1, the method 100 further includes generating, 120, a control signal for controlling adjustment of a phase of at least one photonic processing signal based on the characteristic according to a predetermined logic.

The control signal may relate to a signal used to control the operation of phase-shifters in the photonic processor (internal phase-shifters, such as the heaters) and/or of phase-shifters external to the photonic processor. Based on the control signal, a desired phase-shift of at least one photonic processing signal may be adjusted. A photonic processing signal may relate to any photonic signal that is (to be) input or that is being processed by the photonic processor. In other words, the phase-shift may be adjusted at any (predetermined) point of the photonic processor, e.g., before the signal is input or after it is input.

As indicated above, feedback control may be carried out based on the characteristic and it may be controlled whether the adjusted phase-shift results in an alignment of the characteristic of at least two photonic output signals, such that it may be concluded that the unwanted phase-shift has been reduced.

It should be noted that the present disclosure aims to reduce unwanted phase-shift of photonic signals. However, the photonic processor may willingly induce phase-shifts while processing in order to overlay different signals and thus, in order to process the input signals (or photonic processing signals) to carry out a predetermined computation. Such phase-shifts may be wanted phase-shifts. Hence, the at least one photonic processing signal may carry data to be processed by the photonic processor or may be subject to intended phase-shifts to generate data.

The predetermined logic may include any rule or scheme based on which the unwanted phase-shift may be reduced. For example, as indicated above, the predetermined logic may include comparing the output powers, and generating the control signal based on the comparison of the output powers. For example, the dependency depicted in Fig. 3 may be used for such a comparison.

On the other hand (additionally or alternatively), the predetermined logic includes determining, based on the comparison of the output powers, a direction for the adjustment of the phase by a predetermined phase increment. The control signal may be generated to control adjustment of the phase by the predetermined phase increment in the determined direction. For example, after each increment, the characteristic may be compared and it may be established whether the characteristic has the desired value such that it may be concluded that the unwanted phase-shift has been reduced. The predetermined increment may correspond to a predetermined value that is determined to be sufficient for incrementation. On the other hand, the smallest possible increment (e.g., depending on the circuitry and the phase-shifters that are used) may correspond to the predetermined increment.

For example, the following scheme may be used.

1. Measurement of output powers of at two different to determine the sign of the phase correction. The power level may not be critical, but it may need to remain within the damage threshold of the photonic processor chip, e.g., ca. 0.1 watts. The power ratio/level may be used on the second step to determine the sign of the phase correction. For example, two power meters may be used at the two outputs and the data may be sent to a computer. A high measurement rate may be used for minimizing high-frequency oscillations. The power may be measured in watts (W), milliwatts (mW), microwatts ($\mu$W), or the like.

2. Based on the principles discussed herein (e.g., under reference of Fig. 3) and/or a predetermined equation (such as equation (1) discussed below), the sign/direction of the phase correction may be determined. The sign may depend on the ratio between the output powers.

3. A respective phase shift may be determined. The value of phase shift may be determined by equation (1), it may be determined as a (predetermined) constant, it may depend on the power difference ratio, or incrementing may be carried out, as discussed herein. Hence, only the sign/direction of the correction may be determined.

4. Go back to step 1

In some examples, the predetermined logic includes determining, based on the comparison of the output powers, a phase shift for the adjustment of the phase. In such examples, the control signal may be generated to control adjustment of the phase by the determined phase shift. In contrast to incrementing the phase until the value of the characteristic is reached, in such examples, a target value of the phase-shift to be induced may be calculated and may be directly adjusted. For example, a predetermined formula may be used, such as the following formula to calculate desired amplitudes of photonic output signals:

$$A^{1,2}(\Delta\varphi(t)) = \sigma A_0(\mp 1 \pm i)\big(\pm i + e^{i\Delta\varphi(t)}\big) \tag{1}$$

Such an approach may be adopted in case the input powers of the photonic processing signals are (roughly) equal, and the phase difference is held constant at $\pi/2$ (e.g., configured by an internal Mach-Zehnder interferometer). In above equation, $A_0$ may represent the amplitude of inputs 1 and 2, $\sigma$ may refer to the amount of the power which was used for the feedback control, and $\Delta\varphi(t)$ may refer to the unintended (unwanted) phase difference between inputs 1 and 2 that is to be corrected (to zero at best).

In some examples, the photonic output signals and the at least one photonic processing signal have a same photonic characteristic - or in other words do not differ in their photonic characteristics (except for the phase, in some examples). In such examples, the at least one photonic processing signal may include a photonic input signal for the photonic processor and/or or a photonic signal processed in the photonic processor, as already discussed above. In such examples, the photonic output signals that are used for phase correction/adjustment may be generated based on the photonic processing signal(s).

It should be noted that it may also be envisaged to adjust phase of one photonic processing signal before it is being input and adjust phase of another (or the same) photonic processing signal after being input, i.e., during processing.

A photonic characteristic may refer to a magnitude or physical property that is inherent to light. For example, the photonic characteristic may include at least one of a wavelength and a polarization. In examples in which the photonic output signal is generated based on the photonic processing signal, there may be no change in the characteristic, i.e., wavelength and polarization may be kept or may not be relevant for the phase adjustment.

On the other hand, in some examples, the photonic output signals are based on at least one auxiliary photonic processing signal processed along the same photonic signal path of the photonic processor as the at least one photonic processing signal. For example, two different photonic processing signals different in at least one characteristic (i.e., in at least one of the wavelength and the polarization) may be input into the same input. The auxiliary photonic processing signal may be processed along the same signal path as the photonic processing signal and may be measured at an output to correct the phase of the photonic processing signal at the input or somewhere in the photonic processor.

In other words, when distinct signals are used for processing and for feedback control (FBC), i.e., as photonic output signal, arbitrary phase modulation may be possible, provided there is a clear distinction between the two signals. This may be achieved based on different approaches. For example, the auxiliary photonic processing signal may have a different polarization than the photonic processing signal. For example, the photonic processing signal may be vertically polarized and the auxiliary photonic processing signal (or FBC signal) is horizontally polarized (or vice versa), and the two signals may be separated by polarization-dependent beam splitters. On the other hand, the two signals may have different wavelengths, as phase-shifters may remain insensitive to wavelength differences of e.g., 1 nm or less.

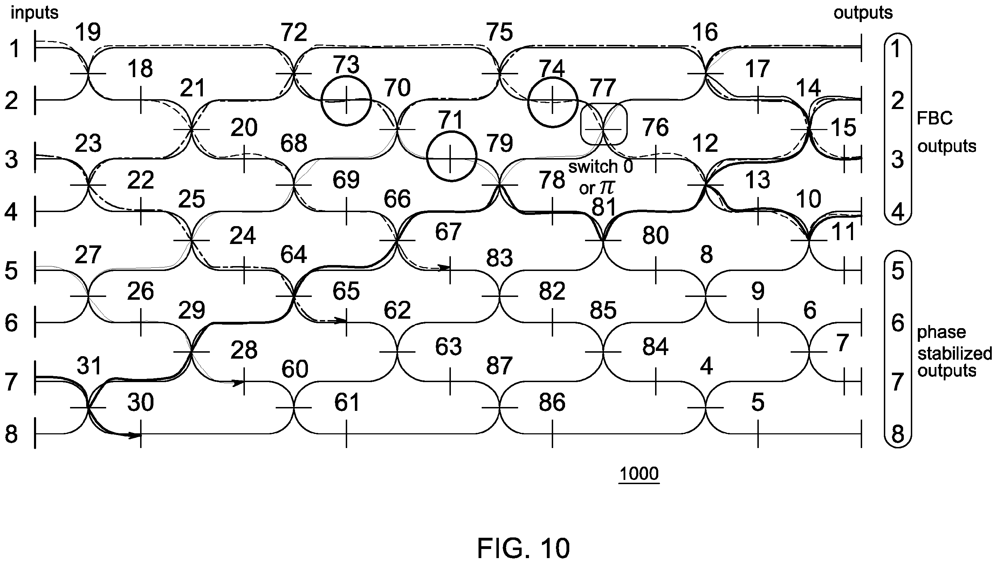

In some examples, the control signal is configured to control a pairwise adjustment of the phase of at least two photonic processing signals based on which at least two photonic output signals are generated, wherein the pairwise adjustment comprises applying an alternating phase-shift to the at least two photonic processing signals. The alternating phase-shift may include a first phase-shift at a first point in time and a second phase-shift at a second point in time. Thus, at the first point in time, the two photonic processing signals may constructively interfere, and at the second point in time, the two photonic processing signals may destructively interfere. Thereby, signal stabilization for a predetermined computation may be achieved, such as a Hadamard transformation. For further explanation, such an example will be discussed under reference of Fig. 10.

Fig. 4 depicts an apparatus 400 including circuitry 410 and, optionally, a photonic processor 420 for phase adjustment according to the present disclosure. The photonic processor 420 includes optical input fibers 430 and optical output fibers 440.

As indicated above, the adjustment of the phase may be carried out for compensating a disturbance that is imparted to at least one of the input fibers 430 and the output fibers 440. The disturbance may include noise, vibrations, movement, human interaction, or the like.

The circuitry 410 is depicted as a computer, but the present disclosure is not limited in that regard. For example, the circuitry 410 may include a single dedicated processor, a single shared processor, or a plurality of individual processors, some of which or all of which may be shared, a digital signal processor (DSP) hardware, an application specific integrated circuit (ASIC), a neuromorphic processor, a field programmable gate array (FPGA), a system-of-chip (SoC), or the like. The processing circuitry may optionally be coupled to, e.g., read only memory (ROM) for storing software, random access memory (RAM) and/or non-volatile memory.

The circuitry is configured to carry out a method according to the present disclosure, such as the method 100 discussed under reference of Fig. 1.

In some examples, the apparatus 400 further includes measurement circuitry configured to measure the characteristic and generate the data indicating the characteristic. In Fig. 4, the measurement circuitry includes two power meters 450 which are coupled to the optical output fibers 440 to obtain a characteristic of the photonic output signals (in this example, a power). However, the power meters 450 may not be included in the apparatus, but may be external to the apparatus, in some examples. However, the present disclosure is not limited to two power meters and each output of the photonic processor 420 may be provided with a respective power meter. The number of power meters may depend on a number of photonic output signals.

In some examples, the apparatus 400 includes at least one phase-shifter 460 for the at least one photonic processing signal. In such examples, the circuitry 410 is further configured to output the control signal to the at least one phase-shifter. Thereby, the phase of one photonic processing signal may be adjusted. It should be noted that Fig. 4 depicts only one phase-shifter 460, but the present disclosure is not limited in that regard. For example, one less phase shifter than photonic processing signals may be used in order to maintain a phase relation relative to one other photonic processing signal (whose phase may not be adjusted, in some examples). Also, in Fig. 4, only an external phase-shifter is depicted, but the photonic processor may also include internal phase-shifters, as discussed herein. If an external phase-shifter is used, the phase of the photonic processing signal may be adjusted before being input into the photonic processor 420. If an internal phase-shifter is used, the phase of the photonic processing signal may be adjusted during processing at any point in the photonic processor 420. It should be noted that it may also be possible to use both external and an internal phase-shifter for phase adjustment. An external phase-shifter may have faster response time than an internal phase-shifter. For example, to address high-speed phase fluctuations (or instability) greater than 1 kHz, an external phase-shifter may be used. As indicated above, an internal phase-shifter may be provided as a heater. On the other hand, an external phase-shifter may be based on at least one of transmission line phase-shifters, loaded line phase-shifters, ferrite phase-shifters (magnetic), digital phase-shifters, analog phase-shifters (varactor diodes), mems (micro-electro-mechanical systems) phase-shifters, optical phase-shifters, or the like.

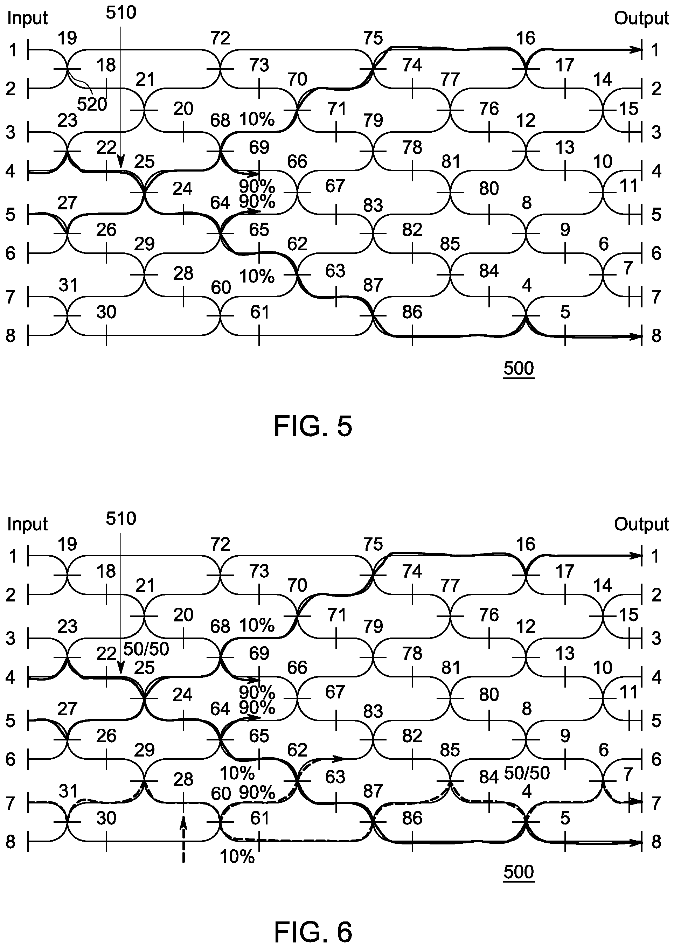

Fig. 5 depicts a layout of a chip 500 of the photonic processor 400. The chip 500 includes a plurality of (internal) phase-shifters 510 and Mach-Zehnder interferometers (MZI) 520 implemented as heaters, as well as optical fibers through which light is transmitted. The optical fibers have intersecting points constituted by the Mach-Zehnder interferometers 520 for overlapping the photonic processing signals in order to carry out a computation. The present chip 500 has an 8x8 layout, i.e., has eight inputs and eight outputs, but the present disclosure is not limited in that regard. The principles of the present disclosure may be applicable to any number of inputs and outputs, such as a 12x12 layout, a 16x16 layout, a 32x32 layout, a 64x64 layout, or the like. In the depiction of Fig. 5, all the components are enumerated, but generally, all the phase-shifters 510 (vertical bars) may be based on the same technology, and the Mach-Zehnder interferometers 520 (horizontal bars) may be based on the same technology (without limiting the present disclosure in that regard).

Fig. 5 depicts the case of two inputs and two outputs. A first photonic processing signal is input in input 4 and a second photonic processing signal is input in input 5. At MZI 25, the paths of the two photonic processing signals are rerouted, such that the first photonic processing signal is routed to output 8 and the second photonic processing signal is routed to output 1. Moreover, at MZI 68, the second photonic processing signal is split into two. Ten percent of the second photonic processing signal are routed to output 1 and ninety percent are routed along another path. Similarly, at MZI 64, the first photonic processing signal is split and ten percent are routed to output 8 while ninety percent are routed along another path.

The fundamental operation of an MZI may be described by the following transformation operator:

$$T_{MZ}(\theta,\varphi) = \frac{1}{2}\begin{pmatrix} 1-e^{-i\theta} & -i\left(1-e^{-i\theta}\right) \\ -ie^{-i\varphi}\left(1-e^{-i\theta}\right) & -e^{-i\varphi}\left(1-e^{-i\theta}\right) \end{pmatrix} \qquad (2)$$

In equation (2), $\varphi$ is the unintended phase-shift and $\theta$ is the intended phase-shift. As indicated by equation (2), when the input power of two signals is similar, the output powers from the MZI can be equalized by maintaining a phase shift of $\pi/2$ between the two inputs. Under these conditions, the phase shifter 22, which is used for feedback control, may adjust to maintain this specific phase difference between inputs 4 and 5. If the phase difference increases by $\Delta\phi$, output power at output 1 will decrease while that at output 8 will increase, and vice versa, as already depicted in Fig. 3.

If the input powers of inputs 4 and 5 are (roughly) equal and the phase difference is held constant at $\pi/2$ (in above equation (2): $\varphi=0$ and $\theta=\pi/2$), the amplitudes of the outputs may be expressed according to equation (1) discussed above. As indicated above, the MZI 64 and 68 reduce the amplitudes of the respective signal. The reason for that is that the amplitudes is reduced in order to correct the output powers of the respective signals and thereby, to adjust the phases. In other words, MZI 64 and 68 may be used to split the light into two parts (e.g., into equal parts, as indicated as 50/50, in some instances). One part may be used for correcting the phase shift, and the second part for performing signal processing. By splitting, the corrected part may be separated from the signal processing part.

Fig. 6 depicts the chip 500, but with three input signals. In addition to the photonic processing signals input in inputs 4 and 5, another one is input in input 7. Since three photonic processing signals are used in this example, at least two phase-shifters may be needed in order to adjust the phases of the three photonic processing signals. In general, for N input/output channels, N-1 phase-shifters may be required. In this example, phase-shifter 28 is used to adjust the phase of the third photonic processing signal. As discussed above, the signal may be split into two (equal) parts (but the present disclosure is not limited to using two equal parts as other ratios of the feedback signal and the processing signal may be used)

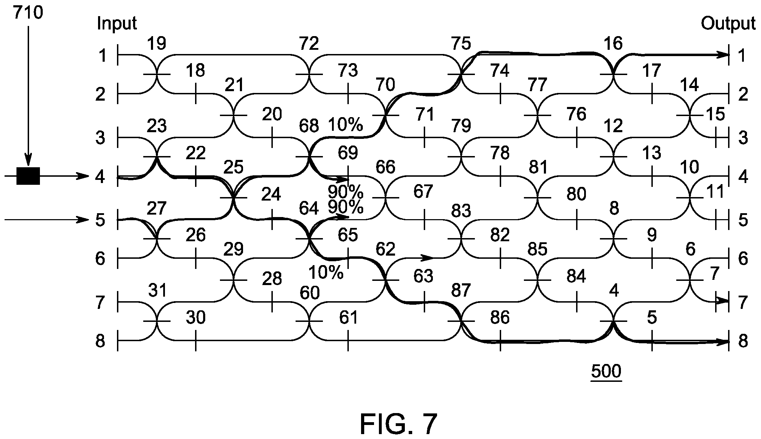

Fig. 7 depicts the chip 500 with two input signals. In this example, an external phase-shifter 710 is used to adjust the phase of the first photonic processing signal before being input in input 4.

It should be noted that the photonic processor may be sensitive to polarization, such that polarization-maintaining input optical fibers should be used. The principles discussed herein may be divided into several cases. In cases where the photonic processing signal and the photonic output signal have the same wavelength or polarization (i.e., the same photonic characteristic as discussed above), phase modulation may be restricted to values of 0 or $\pi$. For such cases, at least a portion of the photonic output signal may be used to manage the phase adjustment of the photonic processing signal (as indicated in Figs. 5, 6, and 7, the photonic processing may be split up for that purpose). For example, restricting phase modulation to values of 0 and $\pi$ may be due to the property of sine and cosine functions having a repeating period, and Equation (1) may only be definitive within the boundaries of this period. In other words, in some instances, it may not be possible to distinguish whether the output intensity corresponds to 0 or $\pi$.)

In the implementation of Fig. 7, temporal distinction may also be applied. FBC correction (phase adjustment) may be performed approximately ten to forty times per second (for example), during which the signal is transmitted without phase modulation, reserving the remaining time for information transmission. Additionally, amplitude modulation with a constant phase may be employed, offering an alternative approach for signal management in certain applications. Since the phase may be locked to a specific value and cannot be manipulated it due to the FBC, an amplitude-modulated signal may be used. In such examples, the phase may be kept constant and the input intensity may be varied. For example, the input intensity may be set to either 0 or 1 to transmit information.

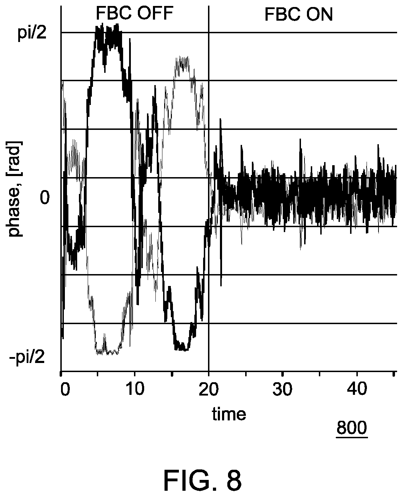

Fig. 8 depicts a diagram 800 showing a result when the principles of the present disclosure are applied (FBC ON - on the right) and when the principles of the present disclosure are not applied (FBC OFF - on the left). The diagram 800 depicts an unwanted phase-shift versus time, similar as in Fig. 2.

The following table shows a statistical analysis of the diagram 800. In particular, the mean velocity of phase change before and after processing through the photonic processor (PP), as well as with the feedback control (FBC) system active. The data demonstrates the effectiveness of feedback control in reducing phase change velocities, leading to improved phase stability of the photonic output signals.

| parameters | Before PP | After PP | After PP with FBC |
|---|---|---|---|
| Mean velocity ($\%(\pi)$/sec): | 0.820 | 5.813 | 1.9 |

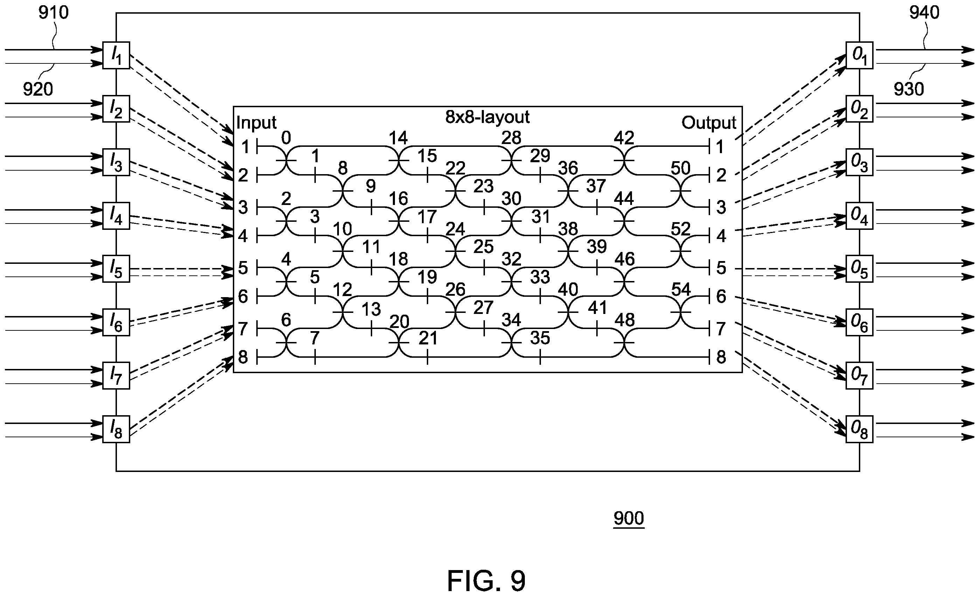

Fig. 9 depicts a photonic processor 900 according to the present disclosure in which photonic processing signals 910 are input into inputs $I_1$ to $I_8$. Moreover, auxiliary photonic processing signals 920 are input into the same input to obtain photonic output signals 930 that are used for phase stabilization. Processing results are yielded in photonic information output signals 940.

According to the present disclosure, a Hadamard transformation may be carried out, as will be discussed in the following under reference of Fig. 10. Both cases (with or without auxiliary photonic processing signal) may be used for carrying out computation such as the Hadamard transformation.

As a general remark, for implementing the Hadamard transformation each signal may be described by a coherent state $|\alpha>$. If the desired functionality (e.g., Hadamard transformation) is implemented for all coherent states, it may be implemented for arbitrary signals since the coherent states may form a basis in the Fock space. If a 4x4 Hadamard transform is performed on any selected 4 input and output modes/channels, stabilization signals (auxiliary photonic processing signals) may be set to be based on (or consist of) the four states $|\alpha>, |\alpha>, |\alpha>, |\alpha>$.

Fig. 10 depicts an 8x8 photonic processing chip 1000 in which four phase stabilized outputs are obtained to perform a predetermined computation, such as a 4x4 Hadamard transformation.

The Hadamard transformation may refer to a linear, orthogonal transformation that maps a vector to another vector through a Hadamard matrix. It may be used in quantum computing and signal processing to create superpositions or to simplify certain computations by converting between time and frequency domains. The transformation may apply an operation similar to a Fourier transform but using real values instead of complex values, making it computationally efficient.

In the example of Fig. 10, the phase-shifters 19, 23, 27, and 31 are used to divide photonic input signals into two parts: photonic processing signals for FBC and photonic processing signal for the predetermined processing (e.g., the Hadamard transformation). The top four outputs are used for the FBC (i.e., the characteristic is measured to adjust/stabilize the phase), while the bottom four outputs are used for the processing (e.g., matrix multiplication in case of the Hadamard transform). Phase shifters 73, 71, and 78 are used for the FBC (phase adjustment). Phase shifter 77 is sequentially adjusted to adjust a phase-shift from 0 to $\pi$ and back. Thus, the phase stabilization is divided into two stages. In the first stage, phase-shifter 77 is set to $\pi$ ("bar" state), thereby stabilizing inputs 1, 5 (together) and 3, 7 (together). In the second stage, phase-shifter 77 is set to a phase of zero ("cross" state) and stabilization occurs between 1, 3 (together) and 5, 7 (together). Furthermore, phase shifters 71 and 73 are used for the first stage of the FBC while phase-shifters 71 and 74 are used for the second stage. Phase-shifter 71 serves as a common phase-shifter, sharing phase information between the two stages. Input 7 remains unaffected by the FBC and is adjusted to match the input phases of inputs 1, 3, and 5 using the respective phase-shifters.

The stabilization algorithm includes two states controlled by phase shifter 77:

1. First state (Phase shifter 77 = 0): Output powers of outputs (1, 2) and (2, 3) are equalized and thereby, input signals on (1, 5) and (3, 7) are phase-adjusted.
2. Second state (Phase shifter 77 = $\pi$): Output powers of outputs (1, 2) and (2, 3) are equalized and thereby, input signals (1, 3) and (5, 7) are phase-adjusted.

In such an approach, (1, 2) and (2, 3) may be equalized at both states. However, the equalized input signals may change at each state, but according to the present disclosure, all four input signals may be stabilized by mixing them, ensuring that all four inputs maintain the same phase.

By alternating between these two states, phase equalization for all four input signals may be achieved. The phase shifters 22, 26 and 30 are moved together with 71, 73, 74. (it is important sentence. The phase shifters 71, 73, and 74 are used to stabilize the input phases. However, they do not affect the portion of the signal that is used for the Hadamard transformation. That is why we need exactly the same phase adjustment for Hadamard transformation part to have stable matrix multiplication. We make it by PSs 22, 26 and 30)

It should be noted that the present disclosure and the phase stabilization is not limited to the use of the phase-shifters as described herein and modifications may be apparent

For an arbitrary number K of signals, a similar approach may be adopted. An incoming signal may be split into two parts (the splitting ratio may be tuned to meet external specifications). The first part may be used to determine relative phase differences between the modes. These phase differences may then be used to control phase-shifters to adjust photonic signals input for the second part. In some examples, this may be achieved by first determining the relative phases between modes (2i, 2i-1) for i=1,...,K/2 and then those between modes (2i, 2i+1) for i=1,...,K/2-1.

In other words, for example for a 32x32 photonic processor, phases may be read out iteratively between modes (1, 2), (3, 4), ... , (15, 16) (e.g., in a first round), and after that between modes (2, 3), (4, 5), ... , (14, 15) (e.g., in a second round). Phase retrieval might need to take into account that, depending on the local gate set, phases may need to be adapted using local gates in a predetermined region when switching between the first and the second round. For example, the predetermined region may correspond to a predetermined pattern on the photonic processor including predetermined phase-shifters or MZIs. For example, in the above-mentioned switching between the first and the second round, half of the gates in the upper sixteen signal lines (if these are used for feedback control) may be used for that purpose. However, which gates (or MZIs or phase-shifters, beam splitter, optical instrument, or the like) are used may depend on the signal lines (or inputs/outputs) that are used for FBC and which are used for signal processing. For example, FBC signal lines may alternate with signal processing signal lines, in which case, a different layout/pattern of the gates may be used and a different phase readout may be applied. For example, for the 32x32 case, if the signal lines alternate, phase may be read out iteratively between modes (1, 3), (5, 7), ... , (29, 31) (as a first round), and after that between modes (3, 5), (7, 9), ... , (27, 29), while the even-numbered signal lines are used for processing. It should be noted that other patterns of signal lines may be used for phase readout and for processing. The light arriving in the second part may be subject to a global phase change to perform the processing (e.g., the Hadamard transformation).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. A method (100) for phase adjustment, the method (100) comprising:

   receiving (110) data indicating a characteristic (310, 320) of photonic output signals (930; 940) of a photonic processor (420; 900);
   generating (120) a control signal for controlling adjustment of a phase of at least one photonic processing signal (910) based on the characteristic (310, 320) according to a predetermined logic.

2. The method (100) of claim 1, wherein the characteristic (310, 320) of the photonic output signals (930; 940) comprises output powers of the photonic output signals (930; 940), wherein the predetermined logic comprises comparing the output powers, and wherein the control signal is generated based on the comparison of the output powers.

3. The method (100) of claim 2, wherein the predetermined logic comprises determining, based on the comparison of the output powers, a direction for the adjustment of the phase by a predetermined phase increment, wherein the control signal is generated to control adjustment of the phase by the predetermined phase increment in the determined direction.

4. The method (100) of claim 2, wherein the predetermined logic comprises determining, based on the comparison of the output powers, a phase shift for the adjustment of the phase, wherein the control signal is generated to control adjustment of the phase by the determined phase shift.

5. The method (100) of any one of claims 1 to 4, wherein the photonic output signals (930; 940) and the at least one photonic processing signal (910) have a same photonic characteristic, and wherein the at least one photonic processing signal (910) is a photonic input signal for the photonic processor (420; 900), or a photonic signal processed in the photonic processor (420; 900).

6. The method (100) of any one of claims 1 to 4, wherein the photonic output signals (930) are based on at least one auxiliary photonic processing signal (920) processed along the same photonic signal path of the photonic processor (420; 900) as the at least one photonic processing signal (910), wherein the at least one photonic processing signal (910) has a first photonic characteristic, and wherein the photonic output signals (930) and the at least one auxiliary photonic processing signal (920) have a second photonic characteristic different from the first photonic characteristic.

7. The method (100) of any one of claims 1 to 6, wherein the control signal is configured to control a pairwise adjustment of the phase of at least two photonic processing signals (910) based on which at least two photonic output signals (930; 940) are generated, wherein the pairwise adjustment comprises applying an alternating phase-shift to the at least two photonic processing signals (910).

8. An apparatus (400) for phase adjustment, the apparatus comprising circuitry (410) configured to carry out the method of any one of claims 1 to 7.

9. The apparatus (400) of claim 8, further comprising measurement circuitry (450) configured to measure the characteristic and generate the data indicating the characteristic.

10. The apparatus (400) of claim 8 or 9, further comprising:
    at least one phase-shifter (460; 510; 710) for the at least one photonic processing signal (910), wherein the circuitry (410) is further configured to output the control signal to the at least one phase-shifter (460; 510; 710).

11. The apparatus (400) of claim 10, wherein the at least one phase-shifter (460; 710) is external to the photonic processor (420; 900) and configured to adjust the phase of the at least one photonic processing signal (910) before being input into the photonic processor (420; 900).

12. The apparatus (400) of any one of claims 8 to 11, further comprising the photonic processor (420; 900).

**13.** The apparatus (400) of claim 12, further comprising:

a plurality of photonic input fibers (430) coupled to inputs of the photonic processor (420; 900);
a plurality of photonic output fibers (440) coupled to outputs of the photonic processor (420; 900) and configured to transmit the photonic output signals (930; 940),
wherein the adjustment of the phase is for compensating a disturbance that is imparted to at least one of the plurality of photonic input fibers (430) and the plurality of photonic output fibers (440).

**14.** The apparatus (400) of claim 12 or 13, wherein the at least one phase-shifter (510) is internal to the photonic processor (420; 900) and configured to adjust the phase of the at least one photonic processing signal (910) in the photonic processor.

**15.** A computer program comprising instructions which, when the program is executed by a computer, cause the computer to carry out the method of any one of claims 1 to 7.

Receiving data indicating a
characteristic of photonic
output signals of a
photonic processor — 110

↓

Generating a control signal — 120
for controlling adjustment
of a phase of at least one
photonic processing signal
based on the characteristic

100

# Fig. 1

FIG. 2a

FIG. 2b

**FIG. 3**

**FIG. 4**

FIG. 5

FIG. 6

FIG. 7

FIG. 8

FIG. 9

FIG. 10

inputs

outputs

FBC outputs

phase stabilized outputs

switch 0 or π

1000

## EUROPEAN SEARCH REPORT

**Application Number**

EP 24 21 0323

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/310070 A1 (MOWER JACOB C [US] ET AL) 10 October 2019 (2019-10-10) | 1-12,14, 15 | INV. G02F1/01 G06N10/00 |
| A | * paragraphs [0006] - [0007] * <br> * paragraph [0010] * <br> * paragraphs [0029] - [0034] * <br> * figure 1 * | 13 | |
| X | CATERINA TABALLIONE ET AL: "A 12-mode Universal Photonic Processor for Quantum Information Processing", ARXIV.ORG, CORNELL UNIVERSITY LIBRARY, 201 OLIN LIBRARY CORNELL UNIVERSITY ITHACA, NY 14853, 10 December 2020 (2020-12-10), XP081833873, | 1-12,14, 15 | |
| A | * abstract * <br> * Sections 1. and 2. * <br> * figure 1 * | 13 | |

TECHNICAL FIELDS
SEARCHED (IPC)

H04B
G06N
G02F

The present search report has been drawn up for all claims

| Place of search | Date of completion of the search | Examiner |
|---|---|---|
| Munich | 24 March 2025 | Rolan Cisneros, E |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 0323

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | Publication date | Patent family member(s) | Publication date |
|---|---|---|---|
| US 2019310070 A1 | 10-10-2019 | US 2015354938 A1 | 10-12-2015 |
| | | US 2016245639 A1 | 25-08-2016 |
| | | US 2018274900 A1 | 27-09-2018 |
| | | US 2019310070 A1 | 10-10-2019 |
| | | WO 2016028363 A2 | 25-02-2016 |

EPO FORM P0459

For more details about this annex : see Official Journal of the European Patent Office, No. 12/82